# EUROPÄISCHE PATENTANMELDUNG

(11) **EP 4 836 250 A1**
(43) Veröffentlichungstag der Anmeldung: **04.11.2026**
(21) Anmeldenummer: 23962771.4
(22) Anmeldetag: 29.12.2023
(51) Int. Cl.: H02K 3/50

(54) **STATOR EINES ELEKTROMOTORS UND MONTAGEVERFAHREN DAFÜR SOWIE ELEKTROMOTOR**

(71) Anmelder: Schaeffler Technologies AG & Co. KG, 91074 Herzogenaurach (DE)
(72) Erfinder: YIN, Qingzhen, Jiading, Shanghai 201804 (CN); LIU, Lei, Jiading, Shanghai 201804 (CN)
(74) Vertreter: Schaeffler Technologies
(86) Internationale Anmeldenummer: PCT/CN2023/143191
(87) Internationale Veröffentlichungsnummer: WO 2025/138093

(57) **Zusammenfassung**

Elektromotorstator, umfassend: einen Eisenkern (1), der mit einer Vielzahl von Nuten (1c) versehen ist, die in Umfangsrichtung (C) beabstandet sind; und eine auf dem Eisenkern (1) montierte Wicklung (2), die Verlängerungsabschnitte (22) umfasst, die sich von jeder Nut (1c) zu beiden axialen Seiten erstrecken. Der Elektromotorstator umfasst ferner Begrenzungsanordnungen (3), wobei die Begrenzungsanordnungen (3) an einer axialen Endfläche des Eisenkerns (1) angeordnet und an dem Eisenkern (1) befestigt sind; und jede Begrenzungsanordnung (3) eine Begrenzungsbohrung (3h) umschließt, wobei die innere Umfangswand der Begrenzungsbohrung (3h) an den durch die Begrenzungsbohrung (3h) verlaufenden Verlängerungsabschnitt (22) anliegt, sodass durch die Begrenzung der Begrenzungsanordnungen (3) zumindest einige der Verlängerungsabschnitte (22) relativ zu dem Eisenkern (1) in radialer Richtung (R) und Umfangsrichtung (C) befestigt sind. Auf diese Weise wird eine relativ einfache mechanische Konstruktion verwendet, um eine mögliche Drahtbewegung in radialer Richtung und Umfangsrichtung des Elektromotorstators zu vermeiden. Ferner werden ein Montageverfahren für den Elektromotorstator und ein Elektromotor, der den Elektromotorstator umfasst, bereitgestellt.

## Beschreibung

### Technisches Gebiet

Die vorliegende Anmeldung betrifft das Gebiet der Elektromotoren, insbesondere einen Elektromotorstator und ein Montageverfahren dafür sowie einen Elektromotor, der den Elektromotorstator umfasst.

### Hintergrund

In einem bestehenden elektrischen Antriebssystem für Fahrzeuge wird ein Elektromotor zum Antrieb der Fahrzeuge verwendet. In dem Elektromotorstator des Elektromotors ist ein Leiter (zum Beispiel ein flacher Kupferdraht) auf einem Eisenkern montiert und bildet einen vorbestimmten Stromkreis aus, wodurch eine Wicklung ausgebildet wird. Zusätzlich ist Isolierpapier in einer Nut des Eisenkerns angeordnet, um die Isolationseigenschaften zwischen den verschiedenen Komponenten des Elektromotorstators zu verbessern. Um den Leiter reibungslos zu montieren und das Isolierpapier richtig anzuordnen, müssen Zwischenräume zwischen dem Leiter und dem Isolierpapier sowie zwischen dem Isolierpapier und einer Nutwand des Eisenkerns vorgesehen werden. In diesem Fall kann es nach der Montage des Elektromotorstators aufgrund einer elektromagnetischen Kraft oder anderer äußerer Kräfte zu Bewegungen des Leiters relativ zu dem Eisenkern in radialer Richtung und Umfangsrichtung des Elektromotors kommen, was eine Verschlechterung des NVH-Verhaltens und möglicherweise einen unerwünschten Verschleiß des Leiters verursacht.

Im Stand der Technik wird, um zu verhindern, dass es zu einer vorstehend beschriebenen Bewegung des Leiters kommt, ein Klebstoff in die Nut des Eisenkerns eingespritzt, nachdem der Leiter und das Isolierpapier auf dem Eisenkern montiert wurden. Die Anwendung dieser Technik in einem nutgekühlten Elektromotor birgt große Herausforderungen. Da der Klebstoff vor dem Aushärten eine starke Fließfähigkeit aufweist, kann er in einen in der Nut des Eisenkerns ausgebildeten Kühlkanal fließen und bewirken, dass der Kühlkanal unerwünscht blockiert wird.

### Kurzdarstellung

Die vorliegende Anmeldung wurde im Hinblick auf die technischen Probleme des vorstehend beschriebenen Stands der Technik erstellt. Es ist eine Aufgabe der vorliegenden Anmeldung, einen Elektromotorstator und ein Montageverfahren dafür bereitzustellen, wobei der Elektromotorstator Bewegungen, die durch einen Leiter in radialer Richtung und Umfangsrichtung des Elektromotorstators entstehen können, verhindern kann und gleichzeitig verhindert, dass ein Kühlkanal in einer Nut eines Eisenkerns durch einen eingespritzten Klebstoff blockiert wird. Eine andere Aufgabe der vorliegenden Anmeldung ist das Bereitstellen eines Elektromotors, der den vorstehend beschriebenen Elektromotorstator umfasst.

Um die vorstehend beschriebenen Aufgaben zu lösen, werden die folgenden technischen Lösungen in der vorliegenden Anmeldung verwendet.

Die vorliegende Anmeldung betrifft einen Elektromotorstator, der eine axiale Richtung, eine radiale Richtung und eine Umfangsrichtung aufweist und Folgendes umfasst:
einen Eisenkern, der mit einer Vielzahl von Nuten versehen ist, die in Umfangsrichtung in Abständen angeordnet sind; und
eine auf dem Eisenkern montierte Wicklung, wobei die Wicklung Verlängerungsabschnitte umfasst, die sich von jeder Nut zu beiden axialen Seiten erstrecken,
der Elektromotorstator umfasst ferner Begrenzungsanordnungen, wobei die Begrenzungsanordnungen an einer axialen Endfläche des Eisenkerns angeordnet und an dem Eisenkern befestigt sind, jede Begrenzungsanordnung eine Begrenzungsbohrung umschließt, eine innere Umfangswand der Begrenzungsbohrung an dem durch die Begrenzungsbohrung verlaufenden Verlängerungsabschnitt anliegt, sodass durch die Begrenzung der Begrenzungsanordnungen zumindest einige der Verlängerungsabschnitte relativ zu dem Eisenkern in radialer Richtung und Umfangsrichtung befestigt sind.

In einer optionalen Lösung umfasst jede Begrenzungsanordnung einen ersten Ring, eine Vielzahl von Keilelementen und einen zweiten Ring, der erste Ring und die Vielzahl von Keilelementen umschließen und bilden die Begrenzungsbohrung aus, einige der Keilelemente erstrecken sich zu Positionen zwischen benachbarten Verlängerungsabschnitten, der erste Ring und der zweite Ring sind jeweils auf beiden radialen Seiten der Verlängerungsabschnitte angeordnet und der zweite Ring drückt die Keilelemente in Richtung des ersten Rings.

Bei einer weiteren optionalen Lösung liegt der erste Ring von einer radial inneren Seite aus an den Verlängerungsabschnitten an, und
jedes der Keilelemente umfasst einen Einführabschnitt und einen Begrenzungsabschnitt, die aneinander befestigt sind, der Einführabschnitt umfasst einen ersten Endabschnitt, einen zweiten Endabschnitt und einen Mittelabschnitt, der zwischen dem ersten Endabschnitt und dem zweiten Endabschnitt angeordnet ist, der erste Endabschnitt ist in den ersten Ring eingeführt, zwei Begrenzungsabschnitte erstrecken sich von dem zweiten Endabschnitt in Richtung zweier Umfangsseiten und liegen von einer radial äußeren Seite an den Verlängerungsabschnitten an, und der Mittelabschnitt ist zwischen zwei in Umfangsrichtung benachbarten Verlängerungsabschnitten angeordnet und liegt an den zwei Verlängerungsabschnitten an.

Bei einer weiteren optionalen Lösung liegt der erste Ring von einer radial äußeren Seite an den Verlängerungsabschnitten an, und
jedes der Keilelemente einen Einführabschnitt und einen Begrenzungsabschnitt umfasst, die aneinander befestigt sind, der Einführabschnitt einen ersten Endabschnitt, einen zweiten Endabschnitt und einen Mittelabschnitt umfasst, der zwischen dem ersten Endabschnitt und dem zweiten Endabschnitt angeordnet ist, der erste Endabschnitt in den ersten Ring eingeführt ist, zwei Begrenzungsabschnitte sich von dem zweiten Endabschnitt in Richtung zweier Umfangsseiten erstrecken und von radial inneren Seiten an den Verlängerungsabschnitten anliegen, und der Mittelabschnitt zwischen zwei benachbarten Verlängerungsabschnitten angeordnet ist und an den zwei Verlängerungsabschnitten anliegt.

Bei einer weiteren optionalen Lösung ist der erste Ring mit einer Vielzahl von Rillen versehen und der erste Endabschnitt ist in die entsprechende Rille eingeführt, um den ersten Ring in axialer Richtung und Umfangsrichtung zu begrenzen.

Bei einer weiteren optionalen Lösung umfasst der erste Ring eine Vielzahl von Vorsprungsabschnitten und einen Hauptkörperabschnitt, die aneinander befestigt sind, wobei sich der Hauptkörperabschnitt durchgehend über den gesamten Umfang in Umfangsrichtung erstreckt, der Hauptkörperabschnitt an dem Eisenkern und den Verlängerungsabschnitten anliegt und die Vielzahl von Vorsprungsabschnitten von dem Hauptkörperabschnitt in Richtung von dem Eisenkern weg hervorstehen, sodass die Rillen zwischen den Vorsprungsabschnitten in Umfangsrichtung benachbart ausgebildet sind.

Bei einer weiteren optionalen Lösung bilden der erste Endabschnitt und der Mittelabschnitt eine gestufte Struktur aus, wobei der Hauptkörperabschnitt und der Mittelabschnitt in radialer Richtung stets voneinander beabstandet sind.

Bei einer weiteren optionalen Lösung wird ferner Isolierpapier vorgesehen, und der erste Ring und die Keilelemente liegen an den Verlängerungsabschnitten an, wobei sich dazwischen das Isolierpapier befindet,
die radialen Endabschnitte der Keilelemente, die sich von dem ersten Ring entfernt befinden, sind zwischen dem zweiten Ring und dem Eisenkern in axialer Richtung angeordnet, und
der zweite Ring drückt die Keilelemente durch eine geneigte Fläche in Richtung des ersten Rings.

Die vorliegende Anmeldung stellt ferner ein Montageverfahren für den Elektromotorstator nach einer der vorstehenden technischen Lösungen bereit, dadurch gekennzeichnet, dass das Montageverfahren Folgendes umfasst:
einen ersten Ringmontageschritt, wobei der erste Ring in axialer Richtung in eine Position bewegt wird, in der der erste Ring an einer axialen Endfläche des Eisenkerns anliegt, sodass der erste Ring in radialer Richtung an den Verlängerungsabschnitten anliegt;
einen Keilelementmontageschritt, wobei jedes der Keilelemente in einer Position zwischen den Verlängerungsabschnitten in unterschiedlichen radialen Richtungen eingeführt wird; und
einen zweiten Ringmontageschritt, wobei der zweite Ring in axialer Richtung in eine Position bewegt wird, in der der zweite Ring an der axialen Endfläche anliegt, und der zweite Ring während der Bewegung des zweiten Rings bewirkt, dass sich das Keilelement in Richtung des ersten Rings bewegt.

Die vorliegende Anmeldung stellt ferner einen Elektromotor bereit, der den Elektromotorstator nach einer der vorstehenden technischen Lösungen umfasst.

Durch Anwendung der vorstehend beschriebenen technischen Lösungen stellt die vorliegende Anmeldung einen Elektromotorstator bereit. Der Elektromotorstator der vorliegenden Anmeldung umfasst den Eisenkern, die Wicklung und die Begrenzungsanordnungen, die zusammengebaut sind. Der Eisenkern ist mit einer Vielzahl von Nuten versehen, die in Umfangsrichtung in Abständen angeordnet sind. Die Wicklung ist auf dem Eisenkern montiert, die Wicklung umfasst Verlängerungsabschnitte, die sich von jeder Nut zu beiden axialen Seiten erstrecken, und die Verlängerungsabschnitte, die sich von verschiedenen Nuten erstrecken, sind in einem vorbestimmten Muster elektrisch miteinander verbunden, wodurch die Wicklung einen vorbestimmten Stromkreis ausbildet. Die Begrenzungsanordnungen sind an einer axialen Endfläche des Eisenkerns angeordnet und an dem Eisenkern befestigt, jede Begrenzungsanordnung umschließt die Begrenzungsbohrung und die innere Umfangswand der Begrenzungsbohrung liegt an dem durch die Begrenzungsbohrung verlaufenden Verlängerungsabschnitt in radialer Richtung und Umfangsrichtung an, sodass durch die Begrenzung der Begrenzungsanordnungen zumindest einige der Vielzahl von Verlängerungsabschnitten relativ zu dem Eisenkern in radialer Richtung und Umfangsrichtung befestigt sind. Durch die Verwendung der Begrenzungsbohrungen der Begrenzungsanordnungen auf diese Weise wird eine mögliche Bewegung des Leiters in radialer Richtung und Umfangsrichtung des Elektromotorstators mit einer relativ einfachen mechanischen Konstruktion verhindert, und da kein Klebstoff in die Nuten des Eisenkerns eingespritzt wird, kann ein Blockieren der Kühlkanäle in den Nuten des Eisenkerns durch eingespritzten Klebstoff vermieden werden. Ferner wird ein Elektromotor bereitgestellt, der den vorstehend beschriebenen Elektromotorstator umfasst, und der Elektromotor weist die gleichen Eigenschaften auf.

Die vorliegende Anmeldung stellt ferner ein Montageverfahren für einen Elektromotorstator bereit. Das Montageverfahren umfasst einen ersten Ringmontageschritt, einen Keilelementmontageschritt und einen zweiten Ringmontageschritt, die nacheinander ausgeführt werden. In dem ersten Ringmontageschritt wird der erste Ring in axialer Richtung in eine Position bewegt, in der der erste Ring an einer axialen Endfläche des Eisenkerns anliegt, sodass der erste Ring in radialer Richtung an den Verlängerungsabschnitten der Wicklungen anliegt. In dem Keilelementmontageschritt wird jedes der Keilelemente in einer Position zwischen den Verlängerungsabschnitten in unterschiedlichen radialen Richtungen eingeführt. In dem zweiten Ringmontageschritt wird der zweite Ring in axialer Richtung in eine Position bewegt, in der der zweite Ring an der axialen Endfläche anliegt. Bei der vorstehend beschriebenen axialen Bewegung des zweiten Rings bewirkt der zweite Ring, dass sich die Keilelemente in Richtung des ersten Rings bewegen. Auf diese Weise erleichtert das vorstehend beschriebene Montageverfahren die Durchführung der Montage und beeinträchtigt nicht den Vorgang der Montage der Wicklung auf dem Eisenkern. Das heißt, der Montagevorgang der Begrenzungsanordnungen der vorliegenden Anmeldung hat keinen Einfluss auf den Vorgang des Einführens der Wicklung des Elektromotorstators in den Eisenkern und des anschließenden Verdrillens und elektrischen Verbindens der Wicklung. Stattdessen können die Begrenzungsanordnungen montiert werden, nachdem die Wicklung an ihrem Platz montiert wurde und einen vorbestimmten Stromkreis ausbildet. Der Montagezeitpunkt der Begrenzungsanordnungen ist selbstverständlich nicht darauf beschränkt; beispielsweise können die Begrenzungsanordnungen montiert werden, bevor die Wicklung vollständig ausgebildet ist.

### Kurzbeschreibung der Zeichnungen

Figur 1A ist eine perspektivische Ansicht, die einen Elektromotorstator gemäß einer Ausführungsform der vorliegenden Anmeldung zeigt.
Figur 1B ist eine weitere perspektivische Ansicht, die den Elektromotorstator aus Figur 1A.
Figur 1C ist eine Ansicht, die den explodierten Aufbau des Elektromotorstators aus Figur 1A.
Figur 1D ist eine schematisches Vorderansicht, die den Elektromotorstator aus Figur 1A.
Figur 1E ist eine Querschnittsansicht, die den Elektromotorstator aus Figur 1A zeigt, aufgenommen in axialer Richtung und einer radialen Richtung, wobei eine Schnittlinie weggelassen ist.
Figur 1F, Figur 1G und Figur 1H sind perspektivische Querschnittsansichten, die verschiedene Teilstrukturen des Elektromotorstators aus Figur 1A zeigen, wobei eine Schnittlinie weggelassen ist.
Figur 2 ist eine perspektivische Ansicht, die einen ersten Ring einer Begrenzungsanordnung des Elektromotorstators aus Figur 1A.
Figur 3A und Figur 3B sind perspektivische Ansichten, die ein Keilelement der Begrenzungsanordnung des Elektromotorstators aus Figur 1A.
Figur 4A und Figur 4B sind perspektivische Ansichten, die einen zweiten Ring der Begrenzungsanordnung des Elektromotorstators aus Figur 1A.
Figur 5A bis Figur 5F sind schematische Darstellungen zur Erläuterung eines Montageverfahrens für den Elektromotorstator aus Figur 1A.

### Ausführliche Beschreibung

Im Folgenden werden spezifische Ausführungsformen der vorliegenden Anmeldung in Bezug auf die beigefügten Zeichnungen der Beschreibung ausführlich beschrieben. Es versteht sich, dass diese konkreten Beschreibungen Fachleute nur lehren sollen, wie die vorliegende Anmeldung zu realisieren ist, und weder alle möglichen Implementierungen der vorliegenden Anmeldung erschöpfend darlegen noch den Schutzumfang der vorliegenden Anmeldung einschränken sollen.

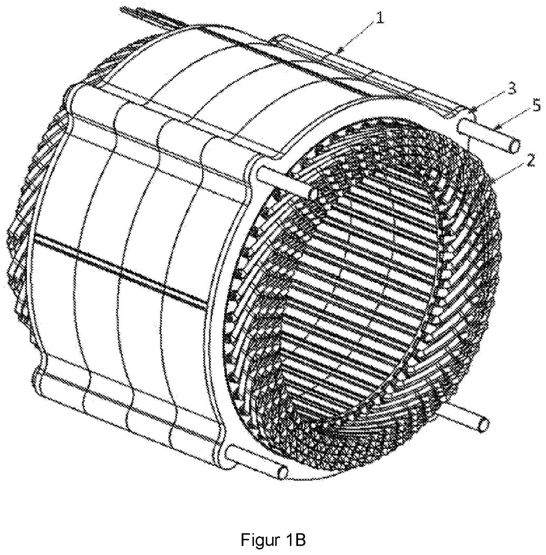

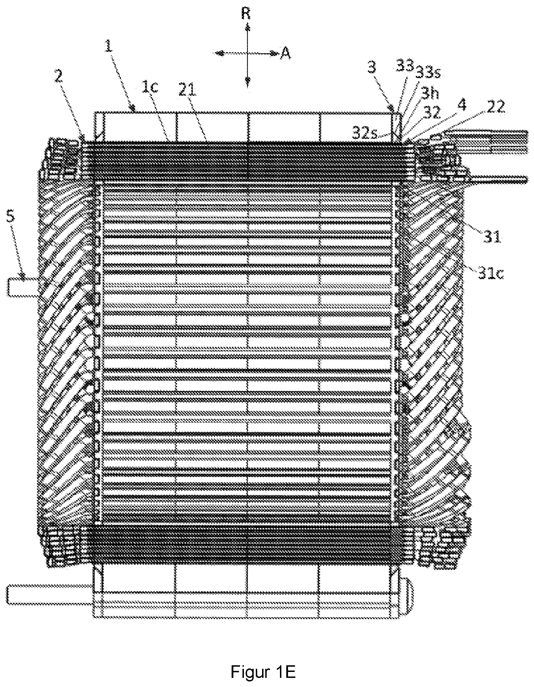

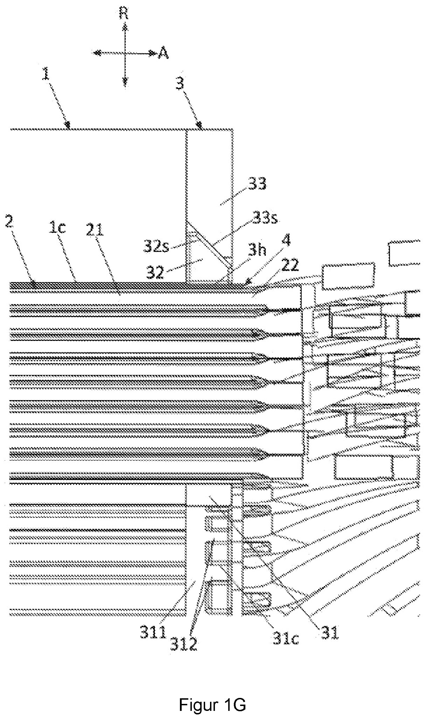

In der vorliegenden Anmeldung bezeichnen die Begriffe "axiale Richtung", "radiale Richtung" und "Umfangsrichtung", sofern nicht anders angegeben, eine axiale Richtung, eine radiale Richtung bzw. eine Umfangsrichtung eines Elektromotorstators (Eisenkern). Ferner bezieht sich "eine axiale Seite" beispielsweise auf die rechte Seite in Figur 1E und Figur 1G und "die andere axiale Seite" bezieht sich beispielsweise auf die linke Seite in Figur 1E und Figur 1G.

In der vorliegenden Anmeldung bezeichnet ein "Verlängerungsabschnitt" einen Abschnitt, in dem sich alle Leiter (z. B. flache Kupferdrähte) einer Wicklung, die in einer Nut des Eisenkerns angeordnet sind, vollständig aus dem Eisenkern in Richtung einer beliebigen axialen Seite erstrecken, wobei jeder Verlängerungsabschnitt genau einer Nut des Eisenkerns entspricht, und die Verbindungsabschnitte verschiedener Verlängerungsabschnitte als an den axialen Endabschnitten der Wicklung gelegen betrachtet werden können.

Ein Elektromotorstator gemäß der vorliegenden Anmeldung wird nachfolgend in Verbindung mit den beigefügten Zeichnungen der Patentschrift beschrieben.

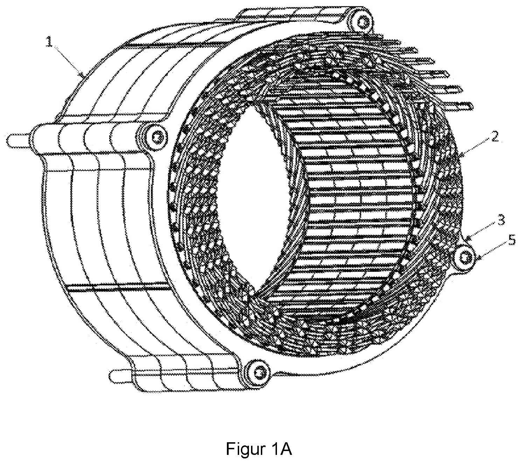

Wie in Figur 1A bis Figur 1H gezeigt, umfasst ein Elektromotorstator gemäß einer Ausführungsform der vorliegenden Anmeldung einen Eisenkern 1, eine Wicklung 2, Begrenzungsanordnungen 3, Isolierpapier 4 und Verbindungselemente 5, die zusammengebaut sind.

In dieser Ausführungsform gilt, wie in FIG. 1A bis FIG. 1H gezeigt, der Eisenkern 1 als Ganzes eine im Wesentlichen zylindrische Form auf und der Eisenkern 1 kann ein laminierter Körper sein, der durch Laminieren von Siliziumstahlblechen in axialer Richtung A ausgebildet wird. Der Eisenkern 1 umfasst einen Jochabschnitt und eine Vielzahl von Zahnabschnitten. Der Jochabschnitt erstreckt sich in Umfangsrichtung C durchgehend über den gesamten Umfang. Die Vielzahl von Zahnabschnitten erstreckt sich vom Jochabschnitt in Richtung einer radial inneren Seite, und die Vielzahl von Zahnabschnitten ist in Abständen in Umfangsrichtung C angeordnet, sodass die Vielzahl von Zahnabschnitten eine Vielzahl von Nuten 1c definiert, die in der Umfangsrichtung C in gleichmäßigen Abständen verteilt sind. Diese Nuten 1c weisen eine rechteckige Querschnittsform auf, wobei zwei axiale Enden jeder Nut 1c nach außen offen sind, ein Ende der radial äußeren Seite der Nut 1c geschlossen ist und ein Ende der radial inneren Seite davon offen ist. Darüber hinaus ist eine äußere Umfangsfläche des Jochabschnitts des Eisenkerns 1 mit einer Vielzahl von Rippen versehen, wobei sich jede Rippe linear in axialer Richtung A erstreckt und sich über die gesamte axiale Länge des Eisenkerns 1 erstreckt und jede Rippe mit einem in axialer Richtung A durchdringenden Verbindungsloch versehen ist.

In dieser Ausführungsform gilt, wie in FIG. 1A bis FIG. 1H gezeigt, die Wicklung 2 eine Hairpin-Wicklung auf und ist aus einer Vielzahl von Hairpin-Einheiten ausgebildet, wobei jede Hairpin-Einheit durch Biegen eines linearen Leiters wie eines einzelnen Drahtes ausgebildet wird, und der einzelne Draht ein flacher Kupferdraht mit einem rechteckigen Querschnitt (einschließlich einer im Wesentlichen rechteckigen Form) sein kann. In einem Zustand, in dem die Wicklung 2 auf dem Eisenkern 1 montiert ist, umfasst die Wicklung 2 in der Nut befindliche Abschnitte 21, die in die Nuten 1c des Eisenkerns 1 eingeführt sind, und Verlängerungsabschnitte 22, die sich von jeder Nut 1c des Eisenkerns 1 zu beiden axialen Seiten erstrecken, wobei die sich von verschiedenen Nuten 1c erstreckenden Verlängerungsabschnitte 22 durch Verdrillen und anschließendes Verschweißen elektrisch verbunden werden können, wodurch bewirkt wird, dass die Wicklung 2 einen vorbestimmten Stromkreis herstellt. Darüber hinaus sind, wie in Figur 1E bis Figur 1H gezeigt, die in den Nuten befindlichen Abschnitte 21 der flachen Kupferdrähte in den Nuten 1c in radialer Richtung R schichtweise angeordnet, und auch die Verlängerungsabschnitte 22 sind in radialer Richtung R schichtweise angeordnet.

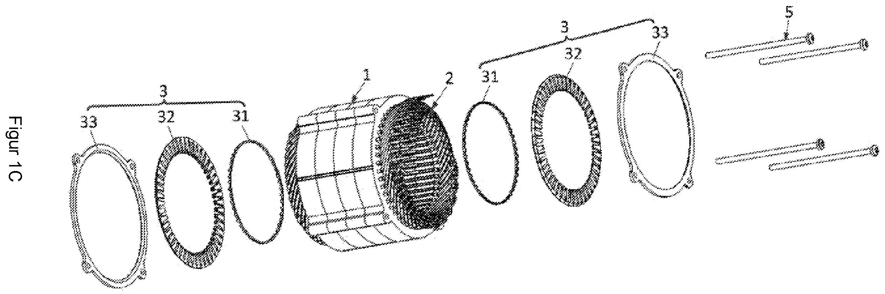

In dieser Ausführungsform gilt, wie in FIG. 1A bis FIG. 1H gezeigt, jeweils zwei Begrenzungsanordnungen 3 an den beiden axialen Endflächen des Eisenkerns 1 angeordnet und sind am Eisenkern 1 befestigt. Jede Komponente in jeder Begrenzungsanordnung 3 kann aus einem isolierenden Material bestehen, und jede Begrenzungsanordnung 3 umschließt eine Vielzahl von Begrenzungsbohrungen 3h, wobei eine innere Umfangswand jeder Begrenzungsbohrung 3h an dem Verlängerungsabschnitt 22, der durch die Begrenzungsbohrung 3h verläuft, in radialer Richtung R und in Umfangsrichtung C anliegt, sodass durch die Begrenzung der Begrenzungsanordnungen 3 alle Verlängerungsabschnitte 22 relativ zu dem Eisenkern 1 in radialer Richtung R und Umfangsrichtung C befestigt sind. Die auf einer axialen Seite angeordneten Begrenzungsanordnungen 3 begrenzen die auf einer axialen Seite angeordneten Verlängerungsabschnitte 22 der Wicklung 2, und die auf der anderen axialen Seite angeordneten Begrenzungsanordnungen 3 begrenzen die auf der anderen axialen Seite angeordneten Verlängerungsabschnitte 22 der Wicklung 2. Wie insbesondere in Figur 1C gezeigt, umfasst jede Begrenzungsanordnung 3 einen ersten Ring 31, eine Vielzahl von Keilelementen 32 und einen zweiten Ring 33, die zusammengebaut sind, wobei der erste Ring 31 und die Vielzahl von Keilelementen 32 eine Vielzahl von Begrenzungsbohrungen 3h umschließen und ausbilden.

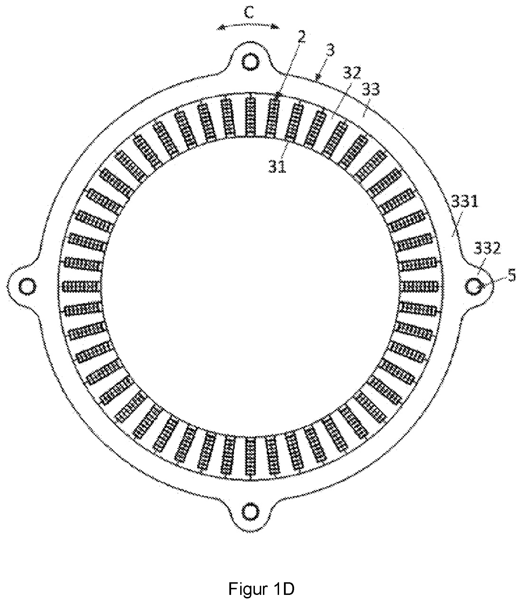

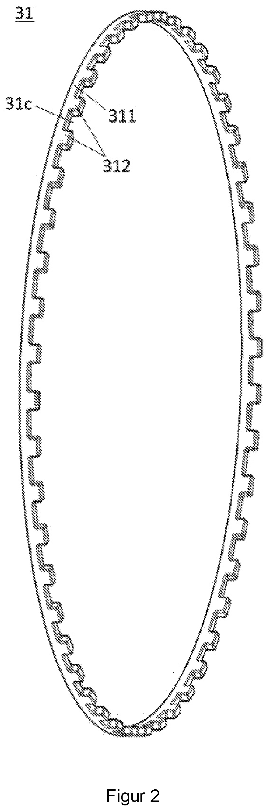

Wie in Figur 1D gezeigt, ist in einem Zustand, in dem der erste Ring 31 montiert ist, eine innere Umfangsfläche des ersten Rings 31 im Wesentlichen bündig mit einer Endfläche der radial inneren Seite des Zahnabschnitts des Eisenkerns 1, und eine äußere Umfangsfläche des ersten Rings 31 liegt an einem flachen Kupferdraht an, der sich an der radial innersten Seite jedes Verlängerungsabschnitts 22 der Wicklung 2 befindet. Wie ferner in Figur 2 gezeigt, umfasst der erste Ring 31 einen Hauptkörperabschnitt 311 und eine Vielzahl von Vorsprungsabschnitten 312, die als Ganzes integriert sind. Der Hauptkörperabschnitt 311 erstreckt sich durchgehend über den gesamten Umfang in Umfangsrichtung C. Der Hauptkörperabschnitt 311 liegt an der axialen Endfläche des Eisenkerns 1 (der axialen Endfläche des Zahnabschnitts des Eisenkerns 1) an und der Hauptkörperabschnitt 311 ist auf der radial inneren Seite des Verlängerungsabschnitts 22 der Wicklung 2 angeordnet und liegt an allen Verlängerungsabschnitten 22 an, wodurch der erste Ring 31 eine Presspassung mit allen Verlängerungsabschnitten 22 herstellen kann. Die Vielzahl von Vorsprungsabschnitten 312 steht von dem Hauptkörperabschnitt 311 in Richtung von dem Eisenkern 1 weg hervor, d. h., die Vielzahl von Vorsprungsabschnitten 312 des ersten Rings 31, der sich auf einer axialen Seite des Eisenkerns 1 befindet, steht relativ zu dem Hauptkörperabschnitt 311 in Richtung einer axialen Seite hervor, während die Vielzahl von Vorsprungsabschnitten 312 des ersten Rings 31, der sich auf der anderen axialen Seite des Eisenkerns 1 befindet, relativ zu dem Hauptkörperabschnitt 311 in Richtung der anderen axialen Seite hervorsteht, sodass zwischen benachbarten Vorsprungsabschnitten 312 in Umfangsrichtung C eine Rille 31c definiert wird.

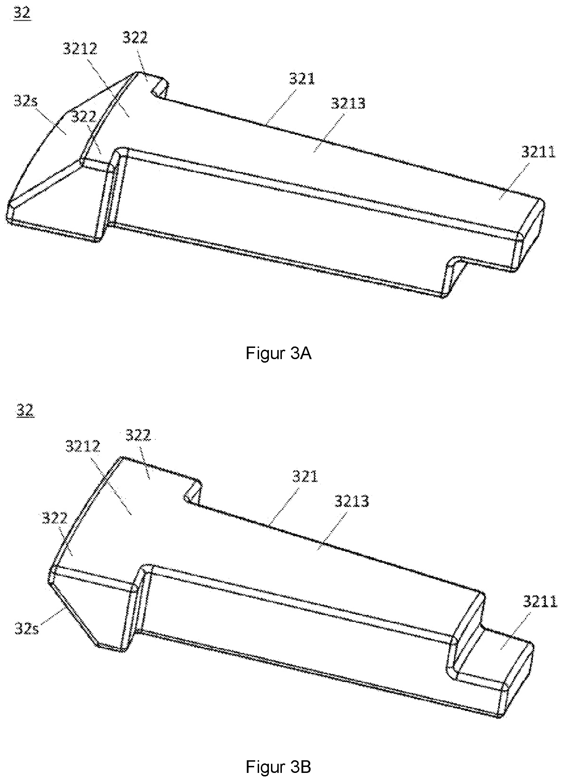

Wie in Figur 3A und Figur 3B gezeigt, weist jedes Keilelement 32 eine T-förmige Konfiguration auf und umfasst einen Einführabschnitt 321 und einen Begrenzungsabschnitt 322, die als Ganzes integriert sind. Der Einführabschnitt 321 umfasst einen ersten Endabschnitt 3211, einen zweiten Endabschnitt 3212 und einen Mittelabschnitt 3213, der zwischen dem ersten Endabschnitt 3211 und dem zweiten Endabschnitt 3212 angeordnet ist. In dieser Ausführungsform ist der erste Endabschnitt 3211 des Einführabschnitts 321 ein Endabschnitt einer radial inneren Seite des Einführabschnitts 321, und der erste Endabschnitt 3211 ist in die Rille 31c des ersten Rings 31 eingeführt. Der zweite Endabschnitt 3212 des Einführabschnitts 321 ist ein Endabschnitt einer radial äußeren Seite des Einführabschnitts 321, und zwei Begrenzungsabschnitte 322 erstrecken sich von dem zweiten Endabschnitt 3212 in Richtung zweier Umfangsseiten. Die Endflächen der radial inneren Seiten der beiden Begrenzungsabschnitte 322 liegen von der radial äußeren Seite aus an einem flachen Kupferdraht an, der sich an der radial äußersten Seite des Verlängerungsabschnitts 22 des Eisenkerns befindet. Der Mittelabschnitt 3213 befindet sich zwischen zwei in Umfangsrichtung C benachbarten Verlängerungsabschnitten 22 und liegt an den beiden Verlängerungsabschnitten 22 an. Darüber hinaus können sich die Begrenzungsabschnitte 322 zweier in Umfangsrichtung C benachbarter Keilelemente 32 im montierten Zustand berühren oder nur einen sehr kleinen Spalt aufweisen, wobei die vorstehend beschriebene Begrenzungsbohrung 3h von den Vorsprungsabschnitten 312 des ersten Rings 31, den Mittelabschnitten 3213 der Einführabschnitte 321 der beiden in Umfangsrichtung C benachbarten Keilelemente 32 und den Begrenzungsabschnitten 322 der beiden Keilelemente 32 umschlossen wird. Darüber hinaus bilden der erste Endabschnitt 3211 und der Mittelabschnitt 3213 eine gestufte Struktur aus, wobei der Hauptkörperabschnitt 311 und der Mittelabschnitt 3213 in radialer Richtung R stets voneinander beabstandet sind, wodurch die Keilelemente 32 unter Verwendung des zweiten Rings 33 im zweiten Ringmontageschritt des nachstehend beschriebenen Montageverfahrens in Richtung der radial inneren Seite gedrückt werden können, ohne dass der Hauptkörperabschnitt 311 und der Mittelabschnitt 3213 die Bewegung der Keilelemente 32 in diesem Vorgang behindern.

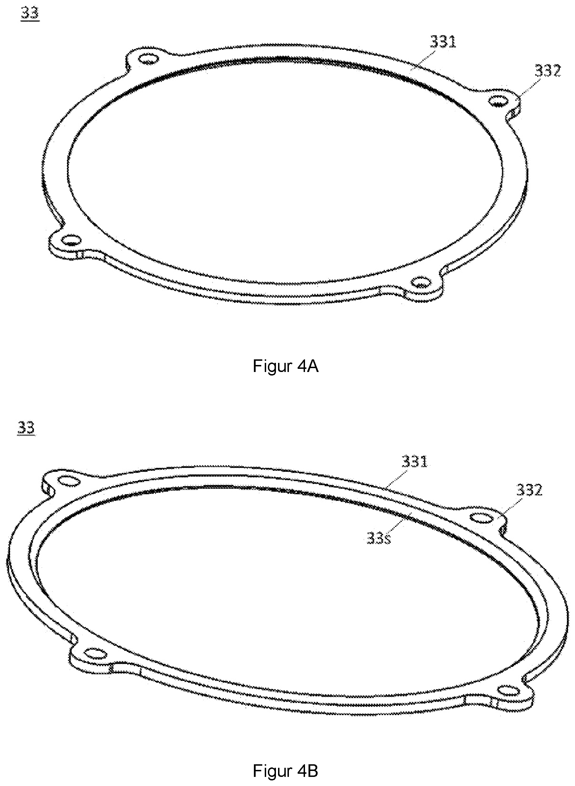

Wie in Figur 4A und Figur 4B gezeigt, umfasst der zweite Ring 33 einen ringförmigen Hauptkörperabschnitt 331 und einen Laschenabschnitt 332, die als Ganzes integriert sind. Der ringförmige Hauptkörperabschnitt 331 erstreckt sich durchgehend über den gesamten Umfang in Umfangsrichtung C. Eine Vielzahl von Laschenabschnitten 332 steht von dem ringförmigen Hauptkörperabschnitt 331 in Richtung der radial äußeren Seite hervor; diese Laschenabschnitte 332 sind in Abständen in Umfangsrichtung C angeordnet, und jeder Laschenabschnitt 332 ist mit einem in axialer Richtung A durchdringenden Verbindungsloch versehen.

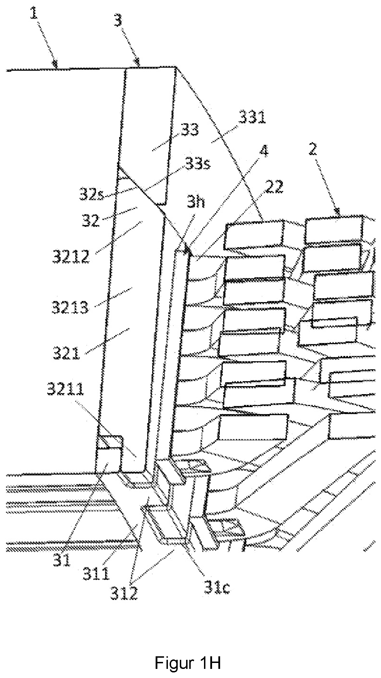

Wie ferner in Figur 1G und Figur 1H gezeigt, sind die radialen Endabschnitte der Keilelemente 32, die sich von dem ersten Ring 31 entfernt befinden, zwischen dem zweiten Ring 33 und dem Eisenkern 1 in axialer Richtung A angeordnet. Das heißt, in dieser Ausführungsform befinden sich die Endabschnitte der radial äußeren Seiten der Keilelemente 32 zwischen dem zweiten Ring 33 und dem Eisenkern 1 in axialer Richtung A. Wie in Figur 3A und Figur 3B gezeigt, ist jedes Keilelement 32 mit einer angetriebenen Fläche 32s versehen, die relativ zu der axialen Richtung A und zu der radialen Richtung R an einer Endfläche eines Endes der radial äußeren Seite geneigt ist, die angetriebene Fläche 32s ist ferner als bogenförmige Fläche vorgesehen, die sich in Umfangsrichtung C erstreckt, der innere Umfangsabschnitt des ringförmigen Hauptkörperabschnitts 331 des zweiten Rings 33 ist mit einer Antriebsfläche 33s versehen, die der Form der angetriebenen Fläche 32s entspricht, sodass während des Bewegungsvorgangs des zweiten Rings 33 in axialer Richtung A zu einer axialen Endfläche des Eisenkerns 1, wobei die Antriebsfläche 33s und die angetriebene Fläche 32s aneinander anliegen, der zweite Ring 33 bewirkt, dass sich das Keilelement 32 in Richtung des ersten Rings 31 bewegt, bis der Begrenzungsabschnitt 322 an dem Verlängerungsabschnitt 22 anliegt und der Begrenzungsabschnitt 322 und der erste Ring 31 den Verlängerungsabschnitt 22 in radialer Richtung R einklemmen.

In dieser Ausführungsform gilt, wie in FIG. 1G und Figur 1H gezeigt, das Isolierpapier 4 im Wesentlichen innerhalb der Nut 1c des Eisenkerns 1 angeordnet und ist zwischen dem in der Nut befindlichen Abschnitt 21 der Wicklung 2 und dem Eisenkern 1 angeordnet, um die Isolationsleistung des Elektromotorstators zu verbessern. Darüber hinaus erstreckt sich das Isolierpapier 4 von jeder Nut 1c des Eisenkerns 1 weiter in Richtung der beiden axialen Seiten, wodurch der erste Ring 31 und die Keilelemente 32 durch das Isolierpapier 4 an dem Verlängerungsabschnitt 22 der Wicklung 2 anliegen, oder mit anderen Worten, der erste Ring 31 und die Keilelemente 32 liegen durch das Isolierpapier 4 an dem Verlängerungsabschnitt 22 der Wicklung 2 an. In axialer Richtung A kann das Isolierpapier 4 aus den Begrenzungsanordnungen 3 oder den Begrenzungsbohrungen 3h in Richtung beider axialen Seiten leicht hervorstehen, ist jedoch nicht darauf beschränkt.

Es versteht sich, dass in der vorliegenden Anmeldung das Anliegen der inneren Umfangswände der Begrenzungsanordnungen 3 oder der Begrenzungsbohrungen 3h an den Verlängerungsabschnitten 22 die folgenden zwei Fälle umfasst: das direkte Anliegen und das indirekte Anliegen (beispielsweise über das Isolierpapier 4) der inneren Umfangswände der Begrenzungsanordnungen 3 oder der Begrenzungsbohrungen 3h an den Verlängerungsabschnitten 22.

In dieser Ausführungsform befestigt, wie in Figur 1A bis Figur 1F gezeigt, eine Vielzahl von Verbindungselementen 5 die auf beiden axialen Seiten des Eisenkerns 1 angeordneten Begrenzungsanordnungen 3 am Eisenkern 1. Jedes Verbindungselement 5 verläuft durch Verbindungslöcher der zweiten Ringe 33 der beiden Begrenzungsanordnungen 3 und ein entsprechendes Verbindungsloch des Eisenkerns 1 und die Begrenzungsanordnungen 3 und der Eisenkern 1 können im Wege einer Schraubgewindepassung der Verbindungselemente 5 mit in den Figuren nicht dargestellten Muttern aneinander befestigt werden, wodurch der Eisenkern 1 und die zwei Begrenzungsanordnungen 3 verbunden und aneinander befestigt werden.

Nachstehend wird ein Montageverfahren für den Elektromotorstator gemäß einer Ausführungsform der vorliegenden Anmeldung beschrieben.

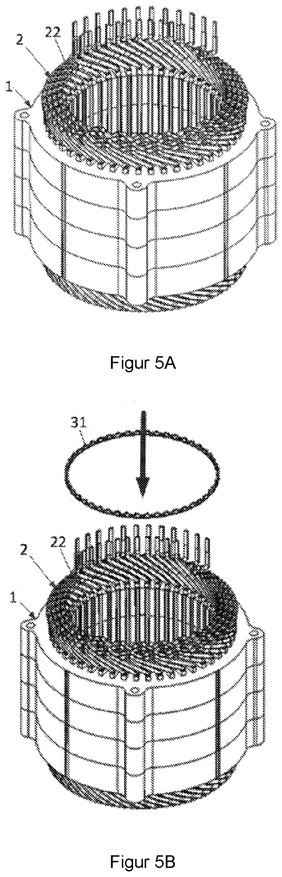

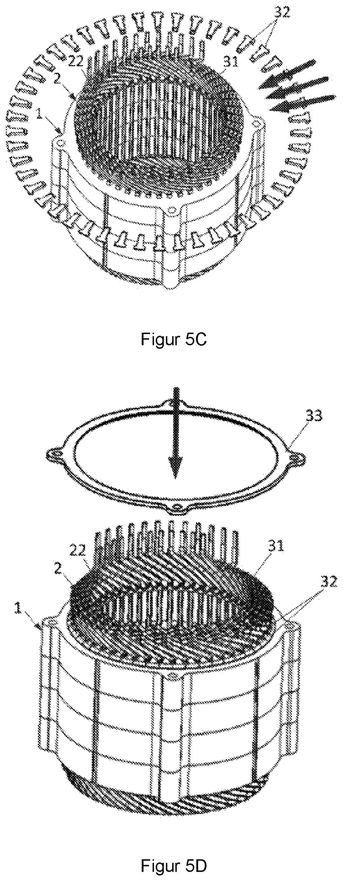

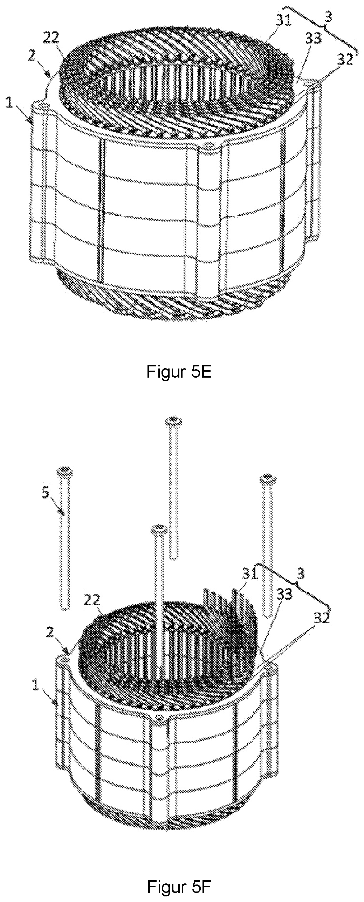

In dieses Montageverfahren können ein erster Ringmontageschritt, ein Keilelementmontageschritt und ein zweiter Ringmontageschritt, die nacheinander durchgeführt werden, einbezogen werden. Insbesondere wird, nachdem das Isolierpapier 4 und die Wicklung 2 an ihren Plätzen montiert sind, ein Zwischenkörper, wie in Figur 5A gezeigt, durch die Montage ausgebildet. Ferner wird im ersten Ringmontageschritt, wie in Figur 5B gezeigt, der erste Ring 31 in axialer Richtung A in eine Position bewegt, in der der erste Ring an der axialen Endfläche des Eisenkerns 1 anliegt, der erste Ring 31 an dem Verlängerungsabschnitt 22 anliegt (oder zumindest anliegt, nachdem der Verlängerungsabschnitt 22 radial durch das Keilelement 32 zusammengedrückt wurde) und der erste Ring 31 eine Presspassung mit allen Verlängerungsabschnitten 22 erreicht. Anschließend wird in dem Keilelementmontageschritt, wie in Figur 5C gezeigt, jedes Keilelement 32 in eine Position zwischen verschiedenen Verlängerungsabschnitten 22 in verschiedenen radialen Richtungen R eingeführt, sodass sich jedes Keilelement 32 zwischen zwei entsprechenden Verlängerungsabschnitten 22 befindet, wobei jedoch ein Endabschnitt einer radial inneren Seite des Keilelements 32 nicht oder nur teilweise in die Rille 31c des ersten Rings 31 eingeführt werden kann. Anschließend wird, wie in Figur 5D gezeigt, in dem zweiten Ringmontageschritt der zweite Ring 33 in axialer Richtung A in die Position bewegt, in der der zweite Ring an der axialen Endfläche des Eisenkerns 1 anliegt. Während eines Bewegungsvorgangs des zweiten Rings 33 mittels der Antriebsfläche 33s und der angetriebenen Fläche 32s, die aneinander anliegen, bewirkt der zweite Ring 33, dass die Keilelemente 32 sich in Richtung des ersten Rings 31 bewegen und auf die äußeren Umfangsflächen der Verlängerungsabschnitte 22 drücken, und zumindest zu diesem Zeitpunkt werden die Endabschnitte der radial inneren Seiten der Keilelemente 32 in die Rillen 31c des ersten Rings 31 eingeführt. Schließlich klemmen die Begrenzungsabschnitte 322 der Keilelemente 32 und der erste Ring 31 die Verlängerungsabschnitte 22 der Wicklung 2 in radialer Richtung R ein, und die Verlängerungsabschnitte 22 werden von den Keilelementen 32 an zwei Seiten in Umfangsrichtung C eingeklemmt, und der zweite Ring 33 liegt an der axialen Endfläche des Eisenkerns 1 an (siehe Figur 5E). Des Weiteren kann die Montage der Begrenzungsanordnung 3 auf der anderen axialen Seite nach den gleichen Schritten wie vorstehend beschrieben erfolgen, und Figur 5F zeigt einen Zwischenkörper mit zwei an ihren Plätzen montierten Begrenzungsanordnungen 3. Darüber hinaus kann, wie in Figur 5F gezeigt, um den zweiten Ring 33 der Begrenzungsanordnung 3 in axialer Richtung A in Richtung der axialen Endfläche des Eisenkerns 1 zu bewegen, jedes Verbindungselement 5 durch die Verbindungslöcher des zweiten Rings 33 der Begrenzungsanordnungen 3 auf den beiden Seiten und durch das Verbindungsloch des Eisenkerns 1 verlaufen, und die vorstehend beschriebene Bewegung des zweiten Rings 33 kann durch Passung des Verbindungselements 5 mit einer nicht dargestellten Mutter erreicht werden. Schließlich werden der Eisenkern 1 und die beiden Begrenzungsanordnungen 3 unter Verwendung dieser Verbindungselemente 5 aneinander befestigt.

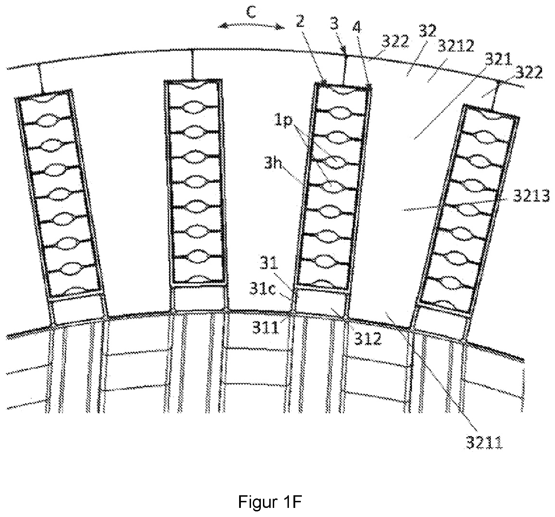

Es versteht sich, dass die vorstehend beschriebenen Ausführungsformen nur beispielhaft sind und die vorliegende Anmeldung nicht einschränken sollen. Fachleute können verschiedene Abwandlungen und Änderungen an den vorstehend beschriebenen Ausführungsformen gemäß der Lehre der vorliegenden Anmeldung vornehmen, ohne von dem Schutzumfang der vorliegenden Anmeldung abzuweichen. Im Folgenden werden die technischen Lösungen der vorliegenden Anmeldung ergänzend beschrieben.
i. Die vorliegende Anmeldung stellt ferner einen Elektromotor bereit, der den vorstehend beschriebenen Elektromotorstator umfasst, und der Elektromotor weist alle technischen Eigenschaften des Elektromotorstators der vorliegenden Anmeldung auf. Der vorstehend beschriebene Elektromotorstator bzw. Elektromotor kann typischerweise in einem elektrischen Brückenantriebssystem oder einem Hybrid-Energiesystem eingesetzt werden, wobei das elektrische Brückenantriebssystem bzw. das Hybrid-Energiesystem einen Elektromotor und ein Getriebe umfassen, die zusammengebaut sind.
ii. In den vorstehenden Ausführungsformen ist der Elektromotorstator ein Elektromotorstator mit Hairpin-Wicklung, die vorliegende Anmeldung ist jedoch nicht darauf beschränkt. Beispielsweise kann der Elektromotorstator der vorliegenden Anmeldung auch ein Elektromotorstator mit Wellenwicklung sein.
iii. In den vorstehenden Ausführungsformen sind alle Verlängerungsabschnitte 22 der Wicklung 2 durch die Begrenzungsbohrungen 3h der Begrenzungsanordnungen 3 begrenzt, die aus den ersten Ringen 31, den zweiten Ringen 33 und den Keilelementen 32 bestehen, die vorliegende Anmeldung ist jedoch nicht darauf beschränkt. Bei einer optionalen Lösung sind beispielsweise nur einige der Verlängerungsabschnitte 22 relativ zu dem Eisenkern 1 in radialer Richtung R und Umfangsrichtung C durch Begrenzung der Begrenzungsanordnungen 3 befestigt. Bei dieser Lösung entspricht eine Hairpin-Einheit aus einer Hairpin-Wicklung einer Vielzahl von Verlängerungsabschnitten 22, nachdem diese in verschiedene Nuten 1c des Eisenkerns 1 eingesetzt wurden, wodurch die Begrenzungsanordnung 3 auf einer axialen Seite einen Verlängerungsabschnitt 22 aus der Vielzahl von Verlängerungsabschnitten 22, die derselben Hairpin-Einheit entsprechen, begrenzen kann. Auf diese Weise müssen andere Verlängerungsabschnitte 22, die der Hairpin-Einheit entsprechen, nicht durch die Begrenzungsanordnung 3 begrenzt werden, wodurch nur einige der Verlängerungsabschnitte 22 relativ zu dem Eisenkern 1 in radialer Richtung R und Umfangsrichtung C durch Begrenzung durch die Begrenzungsanordnung 3 befestigt werden müssen. In einem Beispiel kann die Anzahl der Keilelemente geringer sein als die Anzahl der Zähne des Eisenkerns.
iv. In den vorstehenden Ausführungsformen stehen die ersten Endabschnitte 3211 der Keilelemente 32 nach dem Einführen in die Rillen 31c des ersten Rings 31 mit dem ersten Ring 31 in Spielpassung, die vorliegende Anmeldung ist jedoch nicht darauf beschränkt. Zur Verbesserung der strukturellen Stabilität der Begrenzungsanordnung 3 kann der erste Endabschnitt 3211 mit dem ersten Ring 31 in Presspassung stehen. Es versteht sich, dass unabhängig von der gewählten Montageart zwischen dem ersten Endabschnitt 3211 und dem ersten Ring 31 alle Keilelemente 32 eine relative Bewegung des ersten Rings 31 in axialer Richtung A und Umfangsrichtung C verhindern können. Zusätzlich können die Rillen 31c die Form einer in radialer Richtung R durchdringenden Bohrung annehmen.
   Um die Keilelemente 32 und den ersten Ring 31 in axialer Richtung A noch besser zu positionieren, kann der Elektromotorstator außerdem einen mit dem Eisenkern 1 abgestimmten Ölring umfassen, wobei der Ölring und der Eisenkern 1 einen ringförmigen Ölraum umschließen können und dabei in axialer Richtung A an den Keilelementen 32 und dem ersten Ring 31 anliegen.
v. Die Lösungen in den vorstehenden Ausführungsformen sind auf einen Elektromotor mit Außenstator- und Innenrotoranordnung anwendbar, die vorliegende Anmeldung ist jedoch nicht darauf beschränkt. Die Lösung der vorliegenden Anmeldung ist auch auf einen Elektromotor mit Außenrotor- und Innenstatoranordnung anwendbar. Vor diesem Hintergrund besteht eine mögliche Lösung darin, das Ende der radial äußeren Seite der Nut des Eisenkerns offen und das Ende der radial inneren Seite geschlossen zu halten. Des Weiteren liegt der erste Ring von der radial äußeren Seite aus an dem Verlängerungsabschnitt an. Jedes Keilelement umfasst einen Einführabschnitt und einen Begrenzungsabschnitt, der Einführabschnitt umfasst einen ersten Endabschnitt, einen zweiten Endabschnitt und einen Mittelabschnitt, der zwischen dem ersten Endabschnitt und dem zweiten Endabschnitt angeordnet ist, der erste Endabschnitt ist an dem ersten Ring befestigt, zwei Begrenzungsabschnitte erstrecken sich von dem zweiten Endabschnitt in Richtung zweier Umfangsseiten und liegen von einer radial inneren Seite aus an dem Verlängerungsabschnitt an, und der Mittelabschnitt ist zwischen zwei benachbarten Verlängerungsabschnitten angeordnet und liegt an den zwei Verlängerungsabschnitten an. Bei der vorstehend beschriebenen optionalen Lösung ist der erste Endabschnitt ein Endabschnitt der radial äußeren Seite des Keilelements, und der zweite Endabschnitt ist ein Endabschnitt der radial inneren Seite des Keilelements. Darüber hinaus sind die Endabschnitte der radial inneren Seiten der Keilelemente, die sich von dem ersten Ring entfernt befinden, zwischen dem zweiten Ring und dem Eisenkern in axialer Richtung angeordnet.
vi. In der technischen Lösung der vorliegenden Anmeldung können, wie in Figur 1F gezeigt, Rillen, die sich in axialer Richtung A erstrecken, auf den Oberflächen der Leiter maschinell bearbeitet werden, um Kühlkanäle 1p auszubilden, durch die ein Kühlfluid sowohl innerhalb der Nuten 1c als auch zwischen benachbarten Leitern und zwischen den Leitern und dem Isolierpapier strömen kann.
   Hierbei ist der Elektromotorstator der vorliegenden Anmeldung vorzugsweise, aber nicht notwendigerweise, ein nutgekühlter Stator, und der nutgekühlte Stator bezieht sich hierin auf einen Stator, bei dem ein Kühlfluid durch die Nuten 1c des Eisenkerns strömt, die Leiter aufnehmen, beispielsweise die vorstehend beschriebenen Kühlkanäle 1p, und die Leiter direkt kühlen kann.
vii. Bei der technischen Lösung der vorliegenden Anmeldung können die Begrenzungsanordnungen 3 mit relativ einfacher Konstruktion und bequemer Montage verhindern, dass sich die Wicklung 2 relativ zu dem Eisenkern 1 in radialer Richtung R und in Umfangsrichtung C bewegt, und sie vermeiden ferner eine Situation aus dem Stand der Technik, bei der das Einspritzen eines Klebstoffs in die Nuten 1c des Eisenkerns 1 die Kühlkanäle 1p blockiert. Des Weiteren beeinträchtigt ein Montagevorgang der Begrenzungsanordnungen 3 der vorliegenden Anmeldung nicht die Einfüge-, Verdrill- und Schweißvorgänge der Wicklung 2 des Elektromotorstators, sondern die Begrenzungsanordnungen 3 können montiert werden, nachdem die Wicklung 2 an ihrem Platz montiert wurde und einen vorbestimmten Stromkreis ausbildet. Somit hat der Montagevorgang der Begrenzungsanordnungen 3 der vorliegenden Anmeldung keine negativen Auswirkungen auf die Struktur, die Abmessungen und den Montagevorgang eines bestehenden Elektromotorstators und ermöglicht darüber hinaus die Anwendung der Lösung der vorliegenden Anmeldung auf Elektromotorstatoren unterschiedlicher Typen und Strukturen.

### Beschreibung von Bezugszeichen

1 Eisenkern; 1c Nut; 1p Kühlkanal;
2 Wicklung; 21 in der Nut befindlicher Abschnitt; 22 Verlängerungsabschnitt;
3 Begrenzungsanordnung; 3h Begrenzungsbohrung;
31 erster Ring; 31c Rille; 311 Hauptkörperabschnitt; 312 Vorsprungsabschnitt;
32 Keilelement; 32s angetriebene Fläche; 321 Einführabschnitt; 3211 erster Endabschnitt; 3212 zweiter Endabschnitt; 3213 Mittelabschnitt; 322 Begrenzungsabschnitt;
33 zweiter Ring; 33s Antriebsfläche; 331 ringförmiger Hauptkörperabschnitt; 332 Laschenabschnitt;
4 Isolierpapier;
5 Verbindungselement;
A axiale Richtung; R radiale Richtung; C Umfangsrichtung.

## Patentansprüche

1. Elektromotorstator, der eine axiale Richtung (A), eine radiale Richtung (R) und eine Umfangsrichtung (C) aufweist und Folgendes umfasst:
einen Eisenkern (1), der mit einer Vielzahl von Nuten (1c) versehen ist, die in Umfangsrichtung (C) beabstandet sind; und
eine auf dem Eisenkern (1) montierte Wicklung (2), wobei die Wicklung (2) Verlängerungsabschnitte (22) umfasst, die sich von jeder Nut (1c) zu beiden axialen Seiten erstrecken,
wobei der Elektromotorstator ferner Begrenzungsanordnungen (3) umfasst, die Begrenzungsanordnungen (3) an axialen Endflächen des Eisenkerns (1) angeordnet und an dem Eisenkern (1) befestigt sind, jede Begrenzungsanordnung (3) eine Begrenzungsbohrung (3h) umschließt, eine innere Umfangswand der Begrenzungsbohrung (3h) an dem durch die Begrenzungsbohrung (3h) verlaufenden Verlängerungsabschnitt (22) anliegt, sodass durch die Begrenzung der Begrenzungsanordnungen (3) zumindest einige der Verlängerungsabschnitte (22) relativ zu dem Eisenkern (1) in radialer Richtung (R) und Umfangsrichtung (C) befestigt sind.

2. Elektromotorstator nach Anspruch 1, wobei jede Begrenzungsanordnung (3) einen ersten Ring (31), eine Vielzahl von Keilelementen (32) und einen zweiten Ring (33) umfasst, der erste Ring (31) und die Vielzahl von Keilelementen (32) die Begrenzungsbohrung (3h) umschließen und ausbilden, einige der Keilelemente (32) sich zu Positionen zwischen benachbarten Verlängerungsabschnitten (22) erstrecken, der erste Ring (31) und der zweite Ring (32) jeweils auf beiden radialen Seiten der Verlängerungsabschnitte (22) angeordnet sind und der zweite Ring (32) die Keilelemente (32) in Richtung des ersten Rings drückt.

3. Elektromotorstator nach Anspruch 2, wobei der erste Ring (31) von einer radial inneren Seite aus an den Verlängerungsabschnitten (22) anliegt, und
jedes der Keilelemente (32) einen Einführabschnitt (321) und einen Begrenzungsabschnitt (322) umfasst, die aneinander befestigt sind, der Einführabschnitt (321) einen ersten Endabschnitt (3211), einen zweiten Endabschnitt (3212) und einen Mittelabschnitt (3213) umfasst, der zwischen dem ersten Endabschnitt (3211) und dem zweiten Endabschnitt (3212) angeordnet ist, der erste Endabschnitt (3211) in den ersten Ring (31) eingeführt ist, zwei Begrenzungsabschnitte (322) sich von dem zweiten Endabschnitt (3212) in Richtung zweier Umfangsseiten erstrecken und von radial äußeren Seiten an den Verlängerungsabschnitten (22) anliegen, und der Mittelabschnitt (3213) zwischen zwei in Umfangsrichtung (C) benachbarten Verlängerungsabschnitten (22) angeordnet ist und an den zwei Verlängerungsabschnitten (22) anliegt.

4. Elektromotorstator nach Anspruch 2, wobei jeder erste Ring von einer radial äußeren Seite an den Verlängerungsabschnitten anliegt, und
jedes der Keilelemente einen Einführabschnitt und einen Begrenzungsabschnitt umfasst, die aneinander befestigt sind, der Einführabschnitt einen ersten Endabschnitt, einen zweiten Endabschnitt und einen Mittelabschnitt umfasst, der zwischen dem ersten Endabschnitt und dem zweiten Endabschnitt angeordnet ist, der erste Endabschnitt in den ersten Ring eingeführt ist, zwei Begrenzungsabschnitte sich von dem zweiten Endabschnitt in Richtung zweier Umfangsseiten erstrecken und von radial inneren Seiten an den Verlängerungsabschnitten anliegen, und der Mittelabschnitt zwischen zwei benachbarten Verlängerungsabschnitten angeordnet ist und an den zwei Verlängerungsabschnitten anliegt.

5. Elektromotorstator nach Anspruch 3 oder 4, wobei jeder erste Ring (31) mit einer Vielzahl von Rillen (31c) versehen ist, wobei der erste Endabschnitt (3211) in die entsprechende Rille (31c) eingeführt ist, um den ersten Ring (31) in axialer Richtung (A) und Umfangsrichtung (C) zu begrenzen.

6. Elektromotorstator nach Anspruch 5, wobei jeder erste Ring (31) eine Vielzahl von Vorsprungsabschnitten (312) und einen Hauptkörperabschnitt (311) umfasst, die aneinander befestigt sind, wobei sich der Hauptkörperabschnitt (311) durchgehend über den gesamten Umfang in Umfangsrichtung (C) erstreckt, der Hauptkörperabschnitt (311) an dem Eisenkern (1) und den Verlängerungsabschnitten (22) anliegt und die Vielzahl von Vorsprungsabschnitten (312) von dem Hauptkörperabschnitt (311) in Richtung von dem Eisenkern (1) weg hervorstehen, sodass die Rillen (31c) zwischen den Vorsprungsabschnitten (312) in Umfangsrichtung (C) benachbart ausgebildet sind.

7. Elektromotorstator nach Anspruch 6, wobei der erste Endabschnitt (3211) und der Mittelabschnitt (3213) eine gestufte Struktur ausbilden und der Hauptkörperabschnitt (311) und der Mittelabschnitt (3213) stets in radialer Richtung (R) beabstandet sind.

8. Elektromotorstator nach einem der Ansprüche 2 bis 4, wobei ferner Isolierpapier (4) vorgesehen ist und der erste Ring (31) und die Keilelemente (32) an den Verlängerungsabschnitten (22) anliegen, wobei sich dazwischen das Isolierpapier (4) befindet,
die radialen Endabschnitte der Keilelemente (32), die sich von dem ersten Ring (31) entfernt befinden, zwischen dem zweiten Ring (33) und dem Eisenkern (1) in axialer Richtung (A) angeordnet sind,
und der zweite Ring die Keilelemente (32) durch eine geneigte Fläche in Richtung des ersten Rings drückt.

9. Montageverfahren für den Elektromotorstator nach einem der Ansprüche 2 bis 8, wobei das Montageverfahren Folgendes umfasst:
einen ersten Ringmontageschritt, wobei der erste Ring (31) in axialer Richtung (A) in eine Position bewegt wird, in der der erste Ring an einer axialen Endfläche des Eisenkerns (1) anliegt, sodass der erste Ring (31) in radialer Richtung (R) an den Verlängerungsabschnitten (22) anliegt;
einen Keilelementmontageschritt, wobei jedes der Keilelemente (32) in einer Position zwischen den Verlängerungsabschnitten (22) in unterschiedlichen radialen Richtungen (R) eingeführt wird; und
einen zweiten Ringmontageschritt, wobei der zweite Ring (33) in axialer Richtung (A) in eine Position bewegt wird, in der der zweite Ring an der axialen Endfläche anliegt, und der zweite Ring (33) während der Bewegung des zweiten Rings (33) bewirkt, dass sich die Keilelemente (32) in Richtung des ersten Rings (31) bewegen.

10. Elektromotor, der den Elektromotorstator nach einem der Ansprüche 1 bis 8 umfasst.
